(19) Europäisches Patentamt
European Patent Office
Office européen des brevets

(11) Veröffentlichungsnummer: **0 016 334**
**A1**

(12) # EUROPÄISCHE PATENTANMELDUNG

(21) Anmeldenummer: 80100735.2

(22) Anmeldetag: 14.02.80

(51) Int. Cl.³: C 09 B 67/36
D 06 P 1/12

(30) Priorität: 22.02.79 DE 2906805

(43) Veröffentlichungstag der Anmeldung: 01.10.80 Patentblatt 80/20

(84) Benannte Vertragsstaaten: CH DE FR IT

(71) Anmelder: HOECHST AKTIENGESELLSCHAFT
Zentrale Patentabteilung Postfach 80 03 20
D-6230 Frankfurt/Main 80(DE)

(72) Erfinder: Kostka, Rudolf
Taunusstrasse 100
D-6052 Mühlheim/Main(DE)

(72) Erfinder: Hertel, Hasso, Dr.
Brunnenweg 10
D-6052 Mühlheim/Main(DE)

(54) **Konzentrierte, lagerstabile Lösungen von wasserunlöslichen Kupplungskomponenten und ihre Verwendung in der Eisfarbenfärberei.**

(57) Konzentrierte, lagerstabile Lösungen von wasserunlöslichen Acylessigsäure-arylamiden als Kupplungskomponenten; diese Lösungen enthalten neben einer oder mehrerer dieser Kupplungskomponenten als Lösemittel Wasser, Natrium- und/oder Kaliumhydroxid sowie als aliphatisches Lösungsmittel einen oder mehrere Mono- oder Di- bis Hexaäthylenglykol- monoalkyläther mit niederen Alkylresten sowie gegebenenfalls Äthylenglykol, Diäthylenglykol und/oder Propylenglykol. Kupplungskomponenten sind bevorzugt wasserunlösliche Acetessigsäurearylamide, insbesondere Bis-acetessigsäureamide von aromatischen Diaminoverbindungen, wie des Diphenyls. Die Kupplungskomponenten können bis zu einer Konzentration von etwa 50 Gew.-% in den Lösungen enthalten sein, ohne daß deren Lagerstabilität verlorengeht.

Die Lösungen können zur Herstellung von wasserunlöslichen Azofarbstoffen auf Fasern in der Eisfarbenfärberei dienen. Beim Eingießen in Wasser, das wenig Natronlauge enthält, ergeben sie sofort gebrauchsfähige Grundierungsbäder.

EP 0 016 334 A1

Croydon Printing Company Ltd.

HOECHST AKTIENGESELLSCHAFT HOE 79/F 037 Dr.ST

Konzentrierte, lagerstabile Lösungen von wasserunlöslichen Kupplungskomponenten und ihre Verwendung in der Eisfarbenfärberei

Die vorliegende Erfindung liegt auf dem Gebiet von konzentrierten Präparationen von Vorprodukten für die Azofarbstoffherstellung, bei welcher konzentrierte Lösungen von wasserunlöslichen Kupplungskomponenten eingesetzt werden.

Wasserunlösliche Verbindungen, die in Folge ihrer endischen Hydroxygruppe zur Azokupplung fähig sind, sind wichtige Farbstoffzwischenprodukte, die seit langem auch zur Herstellung von wasserunlöslichen Azofarbstoffen auf der Faser nach den Methoden der Eisfarbentechnik eingesetzt werden. Zur Anwendung gelangen diese Kupplungskomponenten in alkalischen Lösungen geringer Konzentration. Das Lösen der Kupplungskomponenten bereitet jedoch gewisse Schwierigkeiten. In wässriger Natronlauge können sie nur durch Aufkochen gelöst werden, und will man bei Raumtemperatur arbeiten, so müssen sie mit Äthanol angeteigt und durch Zugabe von Natronlauge und Wasser gelöst werden (vgl. hierzu Naphthol AS Anwendungsvorschriften der Farbwerke Hoechst AG, Nr. 4026). Solche Kupplungskomponenten für die Eisfarbenfärberei sind unter anderem auch Arylamide von Acylessigsäuren.

Wegen der oben beschriebenen Schwierigkeiten bei der Lösung dieser Kupplungskomponenten, die bei der technischen Anwendung für die Eisfarbenfärberei äußerst nachteilig sind, bestand seit langem der Wunsch nach Präparationen solcher Kupplungskomponenten, die durch bloßes Eingießen in eine wässrige Natronlauge gebrauchsfertige Grundierungsbäder ergeben. So sind bereits aus der US-Patentschrift 2 883 258 Lösungen von bestimmten Kupplungskomponenten in einem Gemisch aus Äthylenglykol, Wasser, Natrium- oder Kaliumhydroxid und gegebenenfalls Methanol bekannt. Für die Acylessigsäurearylamide erreicht man in diesen Lösemittelgemischen jedoch keine ausreichend hohen Konzentrationen an der Kupplungskomponente; so ergeben sich beispielsweise beim 4,4'-Bis-acetoacetylamino-3,3'-dimethyl-diphenyl (Colour Index Nr. 37 610) nur Konzentrationen von bis zu 20 Gew.-% an dieser Verbindung in den Lösungen.

Des weiteren sind aus der deutschen Patentschrift 2 552 717 Lösungen von Kupplungskomponenten für die Eisfarbenfärberei bekannt, die als Lösemittel ein Gemisch aus Wasser, Natrium- oder Kaliumhydroxid und Diäthylenglykol und gegebenenfalls Äthylenglykol und/oder Propylenglykol enthalten. Für das 4,4'-Bis-acetoacetylamino-3,3'-dimethyl-diphenyl kann man eine Lösung erhalten, die höchstens 30 gewichtsprozentig an dieser Kupplungskomponente ist.

Aus Preis- und Transportgründen ist es jedoch erwünscht, möglichst hochkonzentrierte Lösungen von Kupplungskomponenten in den Handel zu bringen und in der Technik einzusetzen.

Die vorliegende Erfindung behebt nunmehr diese eben besprochenen Nachteile. Sie betrifft konzentrierte, lagerstabile Lösungen von Kupplungskomponenten für die Eisfarbenreihe, die als Kupplungskomponente(n) eine oder mehrere Acylessigsäure-arylamide, Wasser, Natrium- und/oder

Kaliumhydroxid und gegebenenfalls Äthylenglykol, Diäthylenglykol (der Formel $OH-CH_2-CH_2-O-CH_2-CH_2-OH$) und/oder Propylenglykol und erfindungskennzeichnend einen oder mehrere Mono- oder Di- bis Hexaäthylenglykol-monoalkyläther mit niederen Alkylresten enthalten oder im wesentlichen daraus bestehen.
Diese erfindungsgemäßen Lösungen können die Kupplungskomponenten in Konzentrationen von bis zu etwa 50 Gew.-% enthalten. Insbesondere enthalten die erfindungsgemäßen Lösungen eine oder mehrere Kupplungskomponenten von wasserunlöslichen Acylessigsäurearylamiden mit einer Gesamtkonzentration von 35 bis 45 Gew.-%, vorzugsweise von 40 bis 45 Gew.-%, 3 bis 25 Gew.-% Wasser, vorzugsweise 5 bis 20 Gew.-% Wasser, 2 bis 12 Gew.-%, vorzugsweise 2,5 bis 10 Gew.-% Natrium- und/oder Kaliumhydroxid sowie 15 bis 45 Gew.-%, vorzugsweise 25 bis 45 Gew.-% eines oder mehrerer dieser Mono- oder Polyäthylenglykol-monoalkyläther mit niederen Alkylgruppen oder alternativ 5 bis 50 Gew.-%, vorzugsweise 7 bis 45 Gew.-% eines oder mehrerer dieser Mono- oder Polyäthylenglykol-monoalkyläther mit niederen Alkylresten und 10 bis 30 Gew.-% Äthylenglykol, Diäthylenglykol oder Propylenglykol oder Gemischen derselben.

Als niedere Äthylenglykolmonoalkyläther kommen insbesondere solche in Betracht, die im Alkylrest 1 bis 4, vorzugsweise 2 oder 3 C-Atome enthalten und deren Äthylenglykolrest aus 1 bis 4 Äthylenglykoleinheiten besteht. So sind insbesondere die Monomethyl-, -äthyl-, -propyl- oder -butyläther des Äthylenglykols, des Diäthylenglykols, des Tri- oder Tetraäthylenglykols zu nennen.

Acylessigsäurearylamide, insbesondere Acetessigsäurearylamide, die als Kupplungskomponenten dienen, sind bevorzugt die Bis-acylessigsäureamide von aromatischen Diaminoverbindungen, insbesondere des Diphenyls, vorzugsweise Acetoacetyl-arylamide der allgemeinen Formel

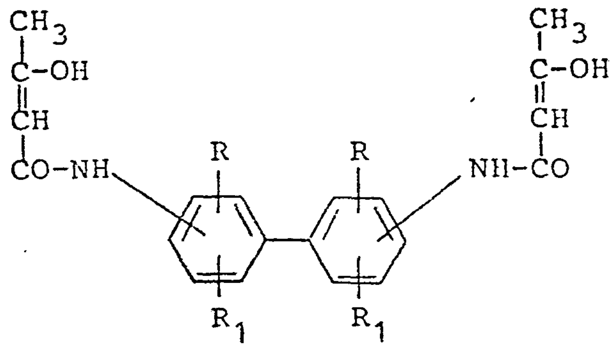

in welcher R und $R_1$ gleich oder verschieden voneinander sind und jedes für ein Wasserstoffatom, ein Halogenatom, wie Chlor- oder Bromatom, bevorzugt Chloratom, eine niedere Alkylgruppe, insbesondere von 1 bis 4 C-Atomen, bevorzugt eine Methyl- oder Äthylgruppe, oder eine niedere Alkoxygruppe, wie insbesondere von 1 bis 4 C-Atomen, bevorzugt eine Methoxy- oder Äthoxygruppe, bedeuten. Bevorzugt stehen die Acylamid-Reste in den 4- und 4'-Stellungen des Diphenyls. Bevorzugt sind weiterhin Lösungen mit Verbindungen dieser allgemeinen Formel, in welcher $R_1$ jeweils für ein Wasserstoffatom steht. Weiterhin sind insbesondere bevorzugt Lösungen von Verbindungen, in welcher die Reste R in 3- und 3'-Stellung des Diphenylrestes stehen. Insbesondere bevorzugt sind Lösungen, die das 4,4'-Bis-acetoacetylamino-3,3'-dimethoxy-diphenyl, das 4,4'-Bis-acetoacetylamino-3,3'-dichlor-diphenyl und insbesondere das 4,4'-Bis-acetoacetylamino-3,3'-dimethyl-diphenyl enthalten.

Die Herstellung der erfindungsgemäßen Lösungen kann durch einfaches Verrühren der Kupplungskomponenten mit Wasser, Natronlauge und/oder Kalilauge und dem Äthylenglykolmonoalkyläther und gegebenenfalls mit Äthylenglykol, Diäthylenglykol und/oder Propylenglykol bei einer Temperatur von 10 bis 30°C, allgemein bei Raumtemperatur, erfolgen.

Setzt man Gemische aus dem Äthylenglykolmonoalkyläther und

dem Äthylenglykol, Diäthylenglykol und/oder Propylenglykol zur Herstellung der erfindungsgemäßen Lösungen ein, so ist das optimale Verhältnis dieser Komponenten von der Art der Kupplungskomponente abhängig, kann jedoch leicht durch Vorversuche ermittelt werden. (Bevorzugt werden als Lösemittel Mono- oder Diäthylenglykol-monoalkyläther mit niederen Alkylresten allein oder im Gemisch mit Äthylenglykol oder Diäthylenglykol eingesetzt.) Gleiches gilt für die verwendete Wassermenge. Das Natrium- und/oder Kaliumhydroxid wird im*) Verhältnis von 1 bis 1,5 Mol pro Mol Kupplungskomponente, vorzugsweise im Verhältnis von 1 bis 1,15 Mol pro Mol Kupplungskomponente in den erfindungsgemäßen Lösungen verwendet. *) allgemeinen im

Die erfindungsgemäßen Lösungen besitzen eine sehr gute Lagerstabilität. Sie zeigen auch bei wechselnden Temperaturen oder bei längerer Lagerung bei 0°C keine Kristallisationserscheinungen. Beim Eingießen in Wasser, das mit wenig Natronlauge versetzt ist, ergeben sie sofort gebrauchsfähige Grundierungsbäder.

Die nachstehenden Beispiele dienen zur Erläuterung der Erfindung. Die Teile sind Gewichtsteile, die Prozentangaben beziehen sich auf Gewichtsprozente, sofern nicht anders vermerkt. Gewichtsteile verhalten sich zu Volumenteilen wie Kilogramm zu Liter.

Beispiel 1:

400 Teile 4,4'-Bis-acetoacetylamino-3,3'-dimethyldiphenyl werden in ein Gemisch aus 400 Teilen Diäthylenglykolmonomethyläther und 200 Teilen 45 %iger Natronlauge eingerührt. Man rührt etwa 30 Minuten bis zur vollständigen Lösung weiter und erhält eine lagerstabile Lösung des 4,4'-Bis-acetoacetylamino-3,3'-dimethyl-diphenyls mit einem Gehalt von 40 %.

Beispiel 2:

Man verfährt zur Herstellung einer erfindungsgemäßen Lösung wie im Beisp. 1 beschrieben, setzt jedoch anstelle von 400 Teilen Diäthylenglykolmonomethyläther ein Gemisch aus 200 Teilen Äthylenglykol-monomethyläther und 200 Teilen Äthylenglykol ein. Man erhält in gleicher Weise eine lagerstabile Lösung.

Beispiel 3:

Man verfährt zur Herstellung der erfindungsgemäßen Lösung wie im Beispiel 1 beschrieben, setzt jedoch anstelle von 400 Teilen Diäthylenglykolmonomethyläther ein Gemisch aus 300 Teilen Diäthylenglykolmonomethyläther und 100 Teilen Diäthylenglykol ein. Man erhält in gleicher Weise eine lagerstabile Lösung.

Beispiel 4:

Man verfährt zur Herstellung einer erfindungsgemäßen Lösung wie im Beispiel 1 beschrieben, setzt jedoch anstelle von 400 Teilen Diäthylenglykolmonomethyläther ein Gemisch aus 300 Teilen Äthylenglykolmonomethyläther und 100 Teilen Diäthylenglykol ein. Man erhält in gleicher Weise eine lagerstabile Lösung.

Anwendungsbeispiel 1:

Zur Bereitung eines Grundierungsbades für die Kontinuefärberei werden 940 Teile enthärtetes Wasser von etwa 20°C

mit 11,4 Volumenteilen 32,5 %iger Natronlauge und 5 Teilen eines Fettsäure-Eiweißabbauprodukt-Kondensates vermischt. Dann werden 44 Teile der in Beispiel 1 beschriebenen erfindungsgemäßen Lösung des 4,4'-Bis-acetoacetylamino-3,3'-dimethyl-diphenyls eingerührt. Man erhält eine farblose Lösung, die sofort gebrauchsfähig ist.

Anwendungsbeispiel 2:

Zur Bereitung eines Grundierungsbades für die Ausziehfärberei werden 990 Teile enthärtetes Wasser von Raumtemperatur mit 30 Teilen Natriumchlorid, 3,1 Volumenteilen 32,5 %iger Natronlauge und 2 Teilen eines Formaldehydnaphthalinsulfonsäure-Kondensationsproduktes verrührt. Hierzu werden 12,1 Teile der erfindungsgemäßen Lösung von Beispiel 1 eingerührt. Die erhaltene farblose Lösung ist sogleich gebrauchsfähig. Sie wird bevorzugt im Flottenverhältnis von 1:20 angewendet.

Patentansprüche:

1. Konzentrierte, lagerstabile Lösungen von Kupplungskomponenten für die Eisfarbenfärberei, die als Kupplungskomponente(n) ein oder mehrere Acylessigsäure-arylamide sowie Wasser, Natrium- und/oder Kaliumhydroxid und ein oder mehrere aliphatische Lösungsmittel enthalten, dadurch gekennzeichnet, daß das aliphatische Lösungsmittel ein Mono- bis Hexaäthylenglykol-monoalkyläther mit niederen Alkylresten oder ein Gemisch derselben ist.

2. Lösungen nach Anspruch 1, dadurch gekennzeichnet,daß sie als aliphatische Lösungsmittel zusätzlich Äthylenglykol, Diäthylenglykol oder Propylenglykol oder ein Gemisch derselben enthalten.

3. Lösungen gemäß Anspruch 1 oder 2, dadurch gekennzeichnet, daß sie die Kupplungskomponente(n) in einer Konzentration von bis zu 50 Gew.-% enthalten.

4. Lösungen nach Anspruch 1, dadurch gekennzeichnet, daß sie 35 bis 45 Gew.-% der Kupplungskomponente(n), 3 bis 25 Gew.-% Wasser, 2 bis 12 Gew.-% Natrium- und/oder Kaliumhydroxid und 15 bis 45 Gew.-% eines oder mehrerer der genannten Mono- oder Polyäthylenglykol-monoalkyläther enthalten.

5. Lösungen nach Anspruch 2, dadurch gekennzeichnet, daß sie 35 bis 45 Gew.-% der Kupplungskomponente(n), 3 bis 25 Gew.-% Wasser, 2 bis 12 Gew.-% Natrium- und/oder Kaliumhydroxid, 10 bis 30 Gew.-% Äthylenglykol, Diäthylenglykol oder Propylenglykol oder Gemische derselben und 5 bis 50 Gew.-% eines oder mehrerer der genannten Mono- oder Polyäthylenglykol-monoalkyläther enthalten.

6. Lösungen nach einem der Ansprüche 1 bis 5, dadurch gekennzeichnet, daß die Kupplungskomponente(n) eine

Verbindung der allgemeinen Formel

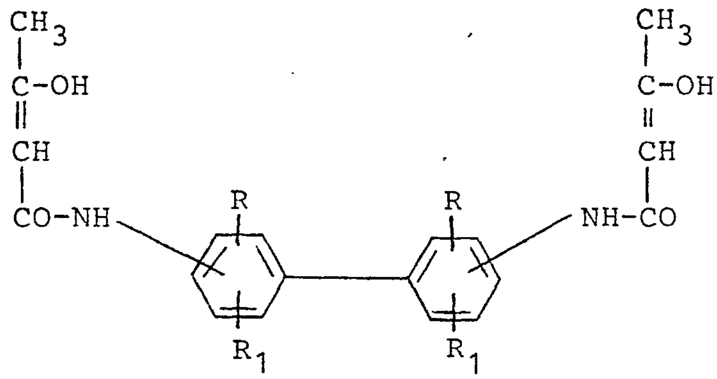

in welcher R und $R_1$ gleich oder verschieden voneinander sind und jedes ein Wasserstoffatom, ein Halogenatom, eine niedere Alkylgruppe oder eine niedere Alkoxygruppe bedeutet, ist.

7. Lösungen nach Anspruch 6, dadurch gekennzeichnet, daß jedes $R_1$ ein Wasserstoffatom ist.

8. Lösungen nach einem der Ansprüche 1 bis 5, dadurch gekennzeichnet, daß die Kupplungskomponente das 4,4'-Bis-acetoacetylamino-3,3'-dimethyl-diphenyl ist.

9. Lösungen nach Anspruch 1, dadurch gekennzeichnet, daß sie 35 bis 45 Gew.-% 4,4'-Bis-acetoacetylamino-3,3'-dimethyl-diphenyl, 5 bis 20 Gew.-% Wasser, 2,5 bis 10 Gew.-% Natrium- und/oder Kaliumhydroxid und 7 bis 45 Gew.-% eines Äthylenglykol-monoalkyläthers mit einem niederen Alkylrest sowie 10 bis 30 Gew.-% Äthylenglykol, Diäthylenglykol und/oder Propylenglykol enthalten.

10. Verwendung der Lösungen nach einem der Ansprüche 1 bis 9 zur Herstellung von wasserunlöslichen Azofarbstoffen auf der Faser.

11. Verwendung der Lösungen nach einem der Ansprüche 1 bis 9 zur Bereitung von Grundierungsbädern für die Eisfarbenfärberei.

Europäisches Patentamt

**EUROPÄISCHER RECHERCHENBERICHT**

Nummer der Anmeldung
EP 80 10 0735

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CH - A - 355 768 (GENERAL ANILINE)<br>* Seite 1, Zeilen 56-68; Beispiele *<br>-- | 1,2 |
| A | US - A - 2 138 572 (R.E.. ETZELMILLER) | |
| A | FR - A - 2 027 073 (HOECHST) | |
| DA | DE - A - 2 552 717 (HOECHST) | |
| DA | US - A - 2 883 258 (SPITZER PERRY)<br>---- | |

KLASSIFIKATION DER ANMELDUNG (Int.Cl. 3)

C 09 B 67/36
D 06 P 1/12

RECHERCHIERTE SACHGEBIETE (Int. Cl. 3)

C 09 B 67/36
D 06 P 1/12
3/68

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 09-06-1980 | DAUKSCH |